# EUROPEAN PATENT SPECIFICATION

(11) **EP 1 017 465 B1**
(45) Date of publication and mention of the grant of the patent: **06.11.2002**
(21) Application number: 98940153.4
(22) Date of filing: 01.07.1998
(51) Int. Cl.: B01D 5/00, B01D 53/24

(54) **REMOVING A GASEOUS COMPONENT FROM A FLUID**
ENTFERNUNG EINER GASFÖRMIGEN KOMPONENTE AUS EINEM FLUID
PROCEDE SERVANT A SUPPRIMER UN CONSTITUANT GAZEUX DEPUIS UN LIQUIDE

(30) Priority: 02.07.1997 EP 97202020
(43) Date of publication of application: 12.07.2000
(73) Proprietor: SHELL INTERNATIONALE RESEARCH MAATSCHAPPIJ B.V., 2596 HR Den Haag (NL)
(72) Inventor: BETTING, Marco, NL-1018 PL Amsterdam (NL); TJEENK WILLINK, Cornelis, Antonie, NL-2288 GD Rijswijk (NL); VAN VEEN, Johannes, Miguel, Henri, Maria, NL-1018 PL Amsterdam (NL)
(86) International application number: EP9804178
(87) International publication number: WO99001194

(56) References cited:
- EP-A- 0 471 321
- EP-A- 0 496 128
- US-A- 3 559 373
- PATENT ABSTRACTS OF JAPAN vol. 014, no. 146 (C-0704), 20 March 1990 & JP 02 017921 A (MITSUBISHI HEAVY IND LTD), 22 January 1990
- DATABASE WPI Section Ch, Week 9109 Derwent Publications Ltd., London, GB; Class J08, AN 91-064239 XP002039697 & SU 1 575 047 A (STARKOV V K) , 30 June 1990

## Description

The present invention relates to removing of one or more gaseous components from a stream of fluid. More particularly the invention relates to removing of a gaseous component from a fluid stream by decreasing the temperature of the fluid to below a selected temperature at which one of condensation and solidification of the selected component occurs thereby forming particles of the selected component, and separating the particles from the stream. Such separation can find application in various industrial processes, for example in removing of carbon dioxide from flue gas, in air-conditioning (water removal) and in drying of natural gas before distributing the gas into a network of pipelines. The term "natural gas" is applied to gas produced from underground accumulations of widely varying composition. Apart from hydrocarbons, natural gas generally includes nitrogen, carbon dioxide and sometimes a small proportion of hydrogen sulphide. The principal hydrocarbon is methane, the lightest and lowest boiling member of the paraffin series of hydrocarbons. Other constituents are ethane, propane, butane, pentane, hexane, heptane, etc. The lighter constituents, e.g. up to butane, are in gaseous phase at atmospheric temperatures and pressures. The heavier constituents are in gaseous phase when at elevated temperatures during production from the subsurface and in liquid phase when the gas mixture has cooled down. Natural gas containing such heavier constituents is known as "wet gas" as distinct from dry gas containing none or only a small proportion of liquid hydrocarbons.

Dutch patent application No. 8901841 discloses a method of removing a selected gaseous component from a stream of fluid containing a plurality of gaseous components, wherein the stream is induced to flow at a supersonic velocity through a conduit so as to decrease the temperature of the fluid in the conduit to below the condensation point of the selected component thereby forming condensed particles of the selected component. The conduit is provided with swirl imparting means to impart a swirling motion to the stream of fluid flowing at supersonic velocity. The condensed particles are extracted in a first outlet stream from a radially outer section of the stream and the remaining fluid is collected in a second outlet stream from a central part of the stream. The velocity in said radially outer section and in said central part of the stream is supersonic.

In an embodiment of the device for separating a gas from a gas mixture as disclosed in NL-8901841, separate shock waves occur in the first and second outlet streams, leading to a relatively large flow resistance of the fluid. Furthermore, the separation efficiency is relatively low so that substantial amounts of the condensed particles are still present in the second outlet stream.

It is an object of the invention to provide an improved method and device for removing a gaseous component from a stream of fluid containing a plurality of gaseous components.

In accordance with the invention there is provided a method of removing a selected gaseous component from a stream of fluid containing a plurality of gaseous components, the method comprising the steps of:
- inducing said stream to flow at supersonic velocity through a conduit so as to decrease the temperature of the fluid to below a selected temperature at which one of condensation and solidification of the selected component occurs thereby forming particles of the selected component, the conduit being provided with swirl imparting means to impart a swirling motion to the stream of fluid thereby inducing the particles to flow to a radially outer section of a collecting zone in the stream;
- creating a shock wave in the stream so as to decrease the axial velocity of the fluid to subsonic velocity;
- extracting the particles into an outlet stream from said radially outer section of the collecting zone, wherein the shock wave is created downstream the swirl imparting means and upstream the collecting zone.

In accordance with another aspect of the invention there is provided a device for removing a selected gaseous component from a stream of fluid containing a plurality of gaseous components, comprising:
- means for inducing said stream to flow at supersonic velocity through a conduit so as to decrease the temperature of the fluid to below a selected temperature at which one of condensation and solidification of the selected component occurs thereby forming particles of the selected component, the conduit being provided with swirl imparting means to impart a swirling motion to the stream of fluid thereby inducing the particles to flow to a radially outer section of a collecting zone in the stream;
- means for creating a shock wave in the stream so as to decrease the axial velocity of the fluid to subsonic velocity;
- means for extracting the particles into an outlet stream from said radially outer section of the collecting zone, wherein the means for creating the shock wave is arranged to create the shock wave downstream the swirl imparting means and upstream the collecting zone.

It was found that the separation efficiency is significantly improved if collection of the particles in the collecting zone takes place after the shock wave, i.e. in subsonic flow rather than in supersonic flow. This is because the shock wave dissipates a substantial amount of kinetic energy of the stream and thereby strongly reduces the axial component of the fluid velocity while the tangential component (caused by the swirl imparting means) remains substantially unchanged. As a result the density of the particles in the radially outer section of the collecting zone is significantly higher than elsewhere in the conduit where the flow is supersonic. It is believed that this effect is caused by the strongly reduced axial fluid velocity and thereby a reduced tendency of the particles to be entrained by a central "core" of the stream where the fluid flows at a higher axial velocity than nearer the wall of the conduit. Thus, in the subsonic flow regime the centrifugal forces acting on the condensed particles are not to a great extent counter-acted by the entraining action of the central "core" of the stream, so that the particles are allowed to agglomerate in the radially outer section of the collecting zone from which they are extracted.

Preferably the shock wave is created by inducing the stream of fluid to flow through a diffuser. A suitable diffuser is a supersonic diffuser.

In an advantageous embodiment, the collecting zone is located adjacent the outlet end of the diffuser.

Further drying of the fluid stream is suitably achieved by introducing the outlet stream of collected particles into a gas/liquid separator to separate a gaseous fraction of the outlet stream from a liquid fraction thereof.

Advantageously, the gaseous fraction of the outlet stream is mixed with the stream of fluid induced to flow at supersonic velocity through the conduit.

Suitably the means for inducing the stream to flow at supersonic velocity comprises a Laval-type inlet of the conduit, wherein the smallest cross-sectional flow area of the diffuser is larger than the smallest cross-sectional flow area of the Laval-type inlet.

In an attractive embodiment of the invention the fluid forms a natural gas produced from an earth formation, and said selected temperature is defined by the condensation point of the selected component whereby condensed particles of the selected component are formed, which particles agglomerate to a liquid outlet stream.

The selected component is, for example, one or more of ethane, propane, butane, pentane, hexane, heptane and octane.

The invention will be described in more detail by way of example with reference to the drawings in which:
Fig. 1 shows schematically a longitudinal cross-section of a first embodiment of the device according to the invention; and
Fig. 2 shows schematically a longitudinal cross-section of a second embodiment of the device according to the invention.

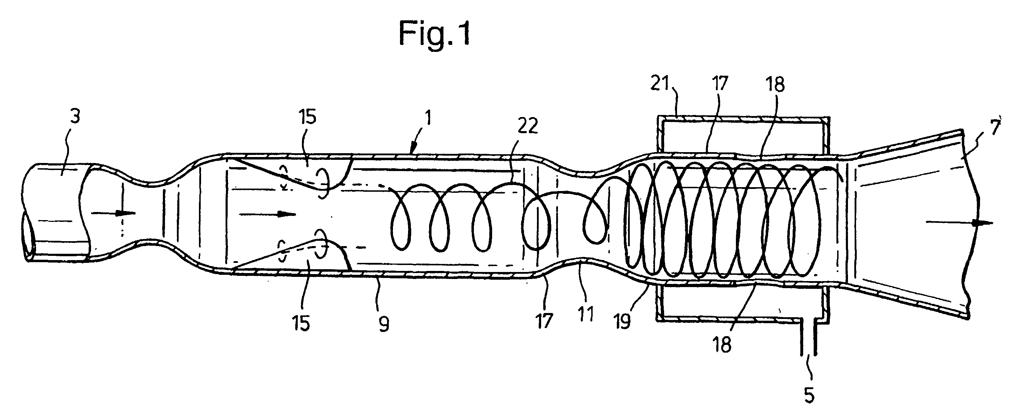

In Fig. 1 is shown a conduit in the form of an open-ended tubular housing 1 having a fluid inlet 3 at one end of the housing, a first outlet 5 for substantially liquid near the other end of the housing, and a second outlet 7 for substantially gas at said other end of the housing. The flow-direction in the device 1 is from the inlet 3 to the first and second outlets 5, 7. The inlet 3 is of the Laval-type, having a longitudinal cross-section of converging - diverging shape in the flow direction so as to induce a supersonic flow velocity to a fluid stream which is to flow into the housing via said inlet 3. The housing 1 is further provided with a primary cylindrical part 9 and a diffuser 11 whereby the primary cylindrical part 9 is located between the inlet 3 and the diffuser 11. One or more (e.g. four) delta-shaped wings 15 project radially inward from the inner surface of the primary cylindrical part 9, each wing 15 being arranged at a selected angle to the flow-direction in the housing so as to impart a swirling motion to fluid flowing at supersonic velocity through the primary cylindrical part 9 of the housing 1.

The diffuser 11 has a longitudinal section of converging - diverging shape in the flow direction, defining a diffuser inlet 17 and a diffuser outlet 19. The smallest cross-sectional flow area of the diffuser is larger than the smallest cross-sectional flow area of the Laval-type inlet 3.

The housing 1 further includes a secondary cylindrical part 17 having a larger flow area than the primary cylindrical part 9 and being arranged downstream the diffuser 11 in the form of a continuation of the diffuser 11. The secondary cylindrical part 17 is provided with longitudinal outlet slits 18 for liquid, which slits 18 are arranged at a suitable distance from the diffuser outlet 19.

A liquid outlet chamber 21 encloses the secondary cylindrical part 17, and is provided with the aforementioned first outlet 5 for substantially liquid.

The secondary cylindrical part 17 debouches into the aforementioned second outlet 7 for substantially gas.

Normal operation of the device 1 is now explained for the application of drying of natural gas. This is by way of example only, and the device 1 is equally suitable for application in other process schemes where gases other than hydrocarbon are to be treated.

A stream of natural gas including lighter and heavier gaseous components, such as methane, ethane, propane, butane, pentane, hexane etc., is introduced into the Laval-type inlet 3. As the stream flows through the inlet 3, the stream is accelerated to supersonic velocity. As a result of the strongly increasing velocity of the stream, the temperature of the stream decreases to below the condensation point of the heavier gaseous components (e.g. pentane, hexane, etc.) which thereby condense to form a plurality of liquid particles. As the stream flows along the delta-shaped wings 15 a swirling motion is imparted to the stream (schematically indicated by spiral 22) so that the liquid particles become subjected to radially outward centrifugal forces. When the stream enters the diffuser 11 a shock wave is created near the downstream outlet 19 of the diffuser 11. The shock wave dissipates a substantial amount of kinetic energy of the stream, whereby mainly the axial component of the fluid velocity is decreased. As a result of the strongly decreased axial component of the fluid velocity, the central part of the stream (or "core") flows at a reduced axial velocity so that there is a reduced tendency of the condensed particles to be entrained by the central part of the stream flowing in the secondary cylindrical part 17. The condensed particles can therefore agglomerate in a radially outer section of a collecting zone of the stream in the secondary cylindrical part 17. The agglomerated particles form a layer of liquid which is extracted from the collecting zone via the outlet slits 18, the outlet chamber 21, and the first outlet 5 for substantially liquid.

The dried natural gas is discharged through the second outlet 7 for substantially gas.

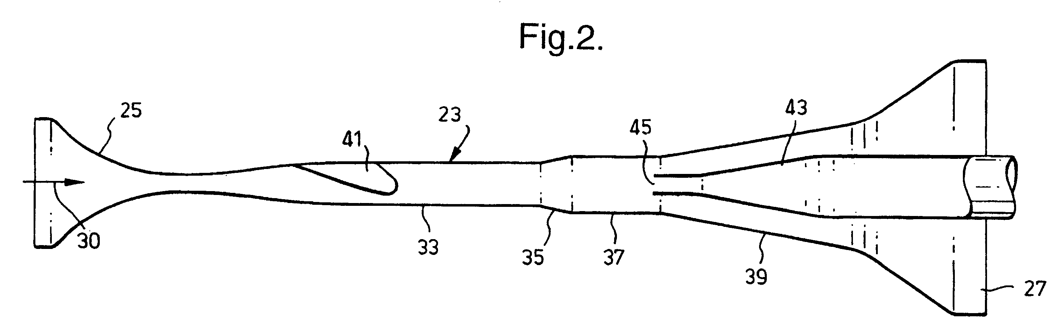

In Fig. 2 is shown a second embodiment of the device for carrying out the invention, the device having an open-ended tubular housing 23 with a Laval-type fluid inlet 25 at one end and a first outlet 27 for substantially liquid at the other end of the housing. The flow-direction for fluid in the device is indicated by arrow 30. The housing has, from the inlet 25 to the liquid outlet 27, a primary substantially cylindrical part 33, a diverging diffuser 35, a secondary cylindrical part 37 and a diverging part 39. A delta-shaped wing 41 projects radially inward in the primary cylindrical part 33, the wing 37 being arranged at a selected angle to the flow-direction in the housing so as to impart a swirling motion to fluid flowing at supersonic velocity through the housing 23. A tube-shaped second outlet 43 for substantially gas extends through the first outlet 27 coaxially into the housing, and has an inlet opening 45 at the downstream end of the secondary cylindrical part 37. The outlet 43 is internally provided with a straightener (not shown), e.g. a vane-type straightener, for transferring swirling flow of the gas into straight flow.

Normal operation of the second embodiment is substantially similar to normal operation of the first embodiment, i.e. supersonic swirling flow occurs in the primary cylindrical part 33, the shock wave occurs near the transition of the diffuser 35 to the secondary cylindrical part 37, subsonic flow occurs in the secondary cylindrical part 37, the liquid is discharged through the first outlet 27, and the dried gas is discharged through the second outlet 43 in which the swirling flow of the gas is transferred into straight flow by the straightener.

In the above detailed description, the housing, the primary cylindrical part, the diffuser and the secondary cylindrical part have a circular cross-section. However, any other suitable cross-section of each one of these items can be selected. Also, the primary and secondary parts can alternatively have a shape other than cylindrical, for example a frusto-conical shape. Furthermore, the diffuser can have any other suitable shape, for example without a converging part (as shown in Fig. 2) especially for applications at lower supersonic fluid velocities.

Instead of each wing being arranged at a fixed angle relative to the axial direction of the housing, the wing can be arranged at an increasing angle in the direction of flow, preferably in combination with a spiralling shape of the wing.

Furthermore, each wing can be provided with a raised wing-tip (also referred to as a winglet).

Instead of the diffuser having a diverging shape (Fig. 2), the diffuser alternatively has a diverging section followed by a converging section when seen in the flow direction. An advantage of such diverging - converging shaped diffuser is that less fluid temperature increase occurs in the diffuser.

To increase the size of the condensed particles, the boundary layer in the supersonic part of the stream can be thickened, e.g. by injecting a gas into the supersonic part of the stream. The gas can be injected, for example, into the primary cylindrical part of the housing via one or more openings provided in the wall of the housing. Suitably part of the gas from the first outlet is used for this purpose. The effect of such gas-injection is that less condensed particles form in the supersonic part of the stream resulting in larger particles and better agglomeration of the larger particles.

The swirl imparting means can be arranged at the inlet part of the conduit, instead of downstream the inlet part.

## Claims

1. A method of removing a selected gaseous component from a stream of fluid containing a plurality of gaseous components, the method comprising the steps of:
- inducing said stream to flow at supersonic velocity through a conduit so as to decrease the temperature of the fluid to below a selected temperature at which one of condensation and solidification of the selected component occurs thereby forming particles of the selected component, the conduit being provided with swirl imparting means to impart a swirling motion to the stream of fluid thereby inducing the particles to flow to a radially outer section of a collecting zone in the stream;
- creating a shock wave in the stream so as to decrease the axial velocity of the fluid to subsonic velocity; and
- extracting the particles into an outlet stream from said radially outer section of the collecting zone, wherein the shock wave is created downstream the swirl imparting means and upstream the collecting zone.

2. The method of claim 1, wherein the fluid forms a natural gas produced from an earth formation, and said selected temperature is defined by the condensation point of the selected component whereby condensed particles of the selected component are formed.

3. The method of claim 2, wherein the selected component is one or more of ethane, propane, butane, pentane, hexane, heptane and octane.

4. The method of any one of claims 1-3, wherein the shock wave is created by inducing the stream of fluid to flow through a diffuser.

5. The method of any one of claims 1-4, wherein said outlet stream is introduced into a gas/liquid separator to separate a gaseous fraction of the outlet stream from a liquid fraction thereof.

6. The method of claim 5, wherein said gaseous fraction is mixed with the stream of fluid induced to flow at supersonic velocity through the conduit.

7. A device for removing a selected gaseous component from a stream of fluid containing a plurality of gaseous components, comprising:
- means (3) for inducing said stream to flow at supersonic velocity through a conduit (1) so as to decrease the temperature of the fluid to below a selected temperature at which one of condensation and solidification of the selected component occurs thereby forming particles of the selected component, the conduit being provided with swirl imparting means (15) to impart a swirling motion to the stream of fluid thereby inducing the particles to flow to a radially outer section of a collecting zone in the stream;
- means (11) for creating a shock wave in the stream so as to decrease the axial velocity of the fluid to subsonic velocity; and
- means (18) for extracting the particles into an outlet stream from said radially outer section of the collecting zone, wherein the means for creating the shock wave is arranged to create the shock wave downstream the swirl imparting means and upstream the collecting zone.

8. The device of claim 7, wherein the means for creating the shock wave includes a diffuser.

9. The device of claim 8, wherein the means for inducing the stream to flow at a supersonic velocity comprises a Laval-type inlet of the conduit, and wherein the smallest cross-sectional flow area of the diffuser is larger than the smallest cross-sectional flow area of the Laval-type inlet.

10. The device of claim 8 or 9, wherein said collecting zone is located adjacent the outlet end of the diffuser.

11. The device of any one of claims 7-10, further comprising a gas/liquid separator having an inlet in fluid communication with said outlet stream and an outlet for a gaseous fraction of said first outlet stream.

12. The device of claim 11, wherein the outlet for the gaseous fraction is connected to an inlet of the conduit so as to mix the gaseous fraction with the stream of fluid flowing at supersonic velocity through the conduit.

## Patentansprüche

1. Verfahren zum Entfernen einer ausgewählten gasförmigen Komponente aus einem Fluidstrom, der mehrere gasförmige Komponenten enthält, welches Verfahren die Schritte aufweist:
- Veranlassen des Stromes zu einer Strömung mit Überschallgeschwindigkeit durch eine Leitung, um die Temperatur des Fluids unter eine ausgewählte Temperatur herabzusetzen, bei welcher eine Kondensation und Verfestigung der ausgewählten Komponente auftritt, wodurch Partikel der ausgewählten Komponente gebildet werden, wobei die Leitung mit Verwirbelungsmitteln ausgestattet ist, um dem Fluidstrom eine Wirbelbewegung zu erteilen, wodurch die Partikel dazu veranlaßt werden, zu einem radial äußeren Abschnitt einer Sammelzone in dem Strom zu strömen;
- Erzeugen einer Schockwelle in dem Strom, um die axiale Geschwindigkeit des Fluids auf Unterschallgeschwindigkeit zu verringern; und
- Abziehen der Partikel aus dem genannten radial äußeren Abschnitt der Sammelzone in einen Auslaßstrom, wobei die Schockwelle stromabwärts der Verwirbelungsmittel und stromaufwärts der Sammelzone erzeugt wird.

2. Verfahren nach Anspruch 1, bei welchem das Fluid ein Erdgas bildet, das aus einer Erdformation gefördert wird, und wobei die ausgewählte Temperatur durch den Kondensationspunkt der ausgewählten Komponente definiert wird, wodurch kondensierte Partikel der ausgewählten Komponente gebildet werden.

3. Verfahren nach Anspruch 2, bei welchem die ausgewählte Komponente eines oder mehrere der Elemente Ethan, Propan, Butan, Pentan, Hexan, Heptan und Oktan ist.

4. Verfahren nach einem der Ansprüche 1 bis 3, bei welchem die Schockwelle erzeugt wird, indem der Fluidstrom zu einer Strömung durch einen Diffusor veranlaßt wird.

5. Verfahren nach einem der Ansprüche 1 bis 4, bei welchem der Auslaßstrom in einen Gas/Flüssigkeit-Abscheider eingebracht wird, um eine gasförmige Fraktion des Auslaßstromes von einer flüssigen Fraktion desselben zu trennen.

6. Verfahren nach Anspruch 5, bei welchem die gasförmige Fraktion mit dem Fluidstrom vermischt wird, der zu einer Strömung mit Überschallgeschwindigkeit durch die Leitung veranlaßt wird.

7. Vorrichtung zum Entfernen einer ausgewählten gasförmigen Komponente aus einem Fluidstrom, der mehrere gasförmige Komponenten enthält, mit:
- Mitteln (3) zum Veranlassen des Stromes zu einer Strömung mit Überschallgeschwindigkeit durch eine Leitung (1), um die Temperatur des Fluids unter eine ausgewählte Temperatur herabzusetzen, bei welcher eine Kondensation und Verfestigung der ausgewählten Komponente auftritt, wodurch Partikel der ausgewählten Komponente gebildet werden, wobei die Leitung mit Verwirbelungsmitteln (15) ausgestattet ist, um dem Fluidstrom eine Wirbelbewegung zu erteilen, wodurch die Partikel dazu veranlaßt werden, zu einem radial äußeren Abschnitt einer Sammelzone in dem Strom zu strömen;
- Mitteln (11) zum Erzeugen einer Schockwelle in dem Strom, um die axiale Geschwindigkeit des Fluids auf Unterschallgeschwindigkeit herabzusetzen;
- Mitteln (18) zum Abziehen der Partikel aus dem genannten radial äußeren Abschnitt der Sammelzone in einen Auslaßstrom, wobei die Mittel zum Erzeugen der Schockwelle so angeordnet sind, daß sie die Schockwelle stromabwärts der Verwirbelungsmittel und stromaufwärts der Sammelzone erzeugen.

8. Vorrichtung nach Anspruch 7, bei welcher die Mittel zum Erzeugen der Schockwelle einen Diffusor aufweisen.

9. Vorrichtung nach Anspruch 8, bei welcher die Mittel zum Veranlassen des Stromes zu einer Strömung mit Überschallgeschwindigkeit einen Laval-Typ-Einlaß der Leitung aufweisen, und wobei der kleinste Strömungsquerschnitt des Diffusors größer ist als der kleinste Strömungsquerschnitt des Laval-Typ-Einlasses.

10. Vorrichtung nach Anspruch 8 oder 9, bei welcher die Sammelzone neben dem Auslaßende des Diffusors liegt.

11. Vorrichtung nach einem der Ansprüche 7 bis 10, ferner mit einem Gas/Flüssigkeit-Abscheider, der einen Einlaß in Fluidverbindung mit dem genannten Auslaßstrom hat und einen Auslaß für eine gasförmige Fraktion des genannten ersten Auslaßstromes.

12. Vorrichtung nach Anspruch 11, bei welcher der Auslaß für die gasförmige Fraktion an einen Einlaß der Leitung angeschlossen ist, um die gasförmige Fraktion mit dem Fluidstrom zu vermischen, der mit Überschallgeschwindigkeit durch die Leitung strömt.

## Revendications

1. Méthode pour supprimer un constituant gazeux prédéterminé d'un flux continu de fluide contenant plusieurs constituants gazeux, la méthode comprenant les étapes :
- d'induction dudit flux continu à traverser une conduite à une vitesse supersonique de manière à diminuer la température du fluide en dessous d'une température prédéterminée à laquelle soit la condensation, soit la solidification du constituant prédéterminé se produit, formant ainsi des particules du constituant prédéterminé, la conduite étant pourvue de moyens provoquant des tourbillons pour communiquer un mouvement tourbillonnaire à un flux continu de fluide de manière à amener les particules à passer par une section radiale externe d'une zone de collecte dans le flux continu;
- de création d'une onde de choc dans le flux continu de manière à diminuer la vitesse axiale du fluide à la vitesse subsonique, et
- d'extraction des particules dans un flux continu de sortie à partir de ladite section radiale externe de la zone de collecte dans laquelle l'onde de choc est créée en aval des moyens provoquant des tourbillons et en amont de la zone de collecte.

2. Méthode suivant la revendication 1, dans laquelle le fluide est formé d'un gaz naturel produit depuis une formation souterraine et ladite température prédéterminée est définie par le point de condensation du constituant prédéterminé auquel des particules condensées du constituant prédéterminé se forment.

3. Méthode suivant la revendication 2, dans laquelle le constituant prédéterminé est un ou plusieurs des constituants suivants : éthane, propane, butane, pentane, hexane, heptane et octane.

4. Méthode suivant l'une des revendications 1 à 3, dans laquelle l'onde de choc est créée en amenant le flux continu de fluide à passer à travers un diffuseur.

5. Méthode suivant l'une des revendications 1 à 4, dans laquelle ledit flux continu de sortie est introduit dans un séparateur gaz/liquide pour séparer une fraction gazeuse du flux continu de sortie d'une fraction liquide.

6. Méthode suivant la revendication 5, dans laquelle ladite fraction gazeuse est mélangée avec le flux continu de fluide amené à passer à la vitesse supersonique à travers le conduit.

7. Dispositif pour extraire un constituant gazeux prédéterminé à partir d'un flux continu de fluide contenant plusieurs constituants gazeux, comprenant :
- des moyens (3) pour induire ledit flux continu à traverser une conduite (1) à une vitesse supersonique de manière à diminuer la température de fluide en dessous d'une température prédéterminée à laquelle soit la condensation, soit la solidification du constituant prédéterminé se produit, formant ainsi des particules du constituant prédéterminé, la conduite étant pourvue de moyens provoquant un tourbillon (15) pour communiquer un mouvement tourbillonnaire au flux continu de fluide de manière à amener des particules à passer par une section radiale externe d'une zone de collecte dans le flux continu;
- des moyens (11) pour créer une onde de choc dans le flux continu de manière à diminuer la vitesse axiale du fluide à une vitesse subsonique; et
- des moyens (18) pour extraire les particules dans un flux de sortie à partir de ladite section radiale externe de la zone de collecte, dans laquelle les moyens pour créer l'onde de choc sont agencés de façon à créer l'onde de choc en aval des moyens provoquant un tourbillon et en amont de la zone de collecte.

8. Dispositif suivant la revendication 7, dans lequel les moyens pour créer l'onde de choc incluent un diffuseur.

9. Dispositif suivant la revendication 8, dans lequel les moyens pour induire le flux continu à passer à une vitesse supersonique comprennent une entrée de type Laval de la conduite, et dans lequel la plus petite aire de la section transversale du flux du diffuseur est plus large que la plus petite aire de la section transversale du flux de l'entrée de type Laval.

10. Dispositif suivant la revendication 8 ou 9, dans lequel ladite zone de collecte est adjacente à l'extrémité de la sortie du diffuseur.

11. Dispositif suivant l'une des revendications 7 à 10, comprenant un séparateur gaz/liquide ayant une entrée en communication avec le fluide avec ledit flux de sortie et une sortie pour une fraction gazeuse dudit premier flux continu de sortie.

12. Dispositif suivant la revendication 11, dans lequel la sortie pour la fraction gazeuse est connectée à une entrée de ladite conduite de manière à mélanger la fraction gazeuse avec le flux continu de fluide traversant la conduite à une vitesse supersonique.
